# EUROPEAN PATENT SPECIFICATION

(11) **EP 3 148 131 B1**
(45) Date of publication and mention of the grant of the patent: **30.10.2019**
(21) Application number: 14895270.8
(22) Date of filing: 16.09.2014
(51) Int. Cl.: H04L 12/749, H04L 12/721, H04L 12/723, H04L 12/46, H04L 12/803, H04L 12/913

(54) **ADDRESS INFORMATION PUBLISHING METHOD AND APPARATUS**
VERFAHREN UND VORRICHTUNG ZUR VERÖFFENTLICHUNG VON ADRESSENINFORMATIONEN
PROCÉDÉ ET APPAREIL DE LIBÉRATION D'INFORMATIONS D'ADRESSE

(30) Priority: 20.06.2014 CN 201410281257
(43) Date of publication of application: 29.03.2017
(73) Proprietor: ZTE Corporation, Shenzhen, Guangdong 518057 (CN)
(72) Inventor: WU, Bo, Shenzhen Guangdong 518057 (CN); LIAO, Ting, Shenzhen Guangdong 518057 (CN); FAN, Liang, Shenzhen Guangdong 518057 (CN)
(74) Representative: Tiburzi, Andrea
(86) International application number: PCT/CN2014/086668
(87) International publication number: WO 2015/192501

(56) References cited:
- CN-A- 101 026 591
- CN-A- 101 026 591
- CN-A- 102 098 222
- FILSFILS C ET AL: "Segment Routing with MPLS data plane; draft-filsfils-spring-segment-routing-mpls -02.txt", SEGMENT ROUTING WITH MPLS DATA PLANE; DRAFT-FILSFILS-SPRING-SEGMENT-ROUTING-MPLS -02.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 6 June 2014 (2014-06-06), pages 1-14, XP015099430, [retrieved on 2014-06-06]
- FILSFILS C ET AL: "Segment Routing interoperability with LDP; draft-filsfils-spring-segment-routing-ldp- interop-01.txt", SEGMENT ROUTING INTEROPERABILITY WITH LDP; DRAFT-FILSFILS-SPRING-SEGMENT-ROUTING-LDP- INTEROP-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 April 2014 (2014-04-18), pages 1-16, XP015098736, [retrieved on 2014-04-18]
- FILSFILS ET AL.: 'Segment Routing with MPLS Data Plane' DRAFT-FILSFILS-SPRING-SEGMENT-ROUTING-MPLS- 02 06 June 2014, XP015095482

## Description

### Technical Field

The present document relates to the field of communications, and more particularly, to a method and apparatus for forwarding data flow.

### Background

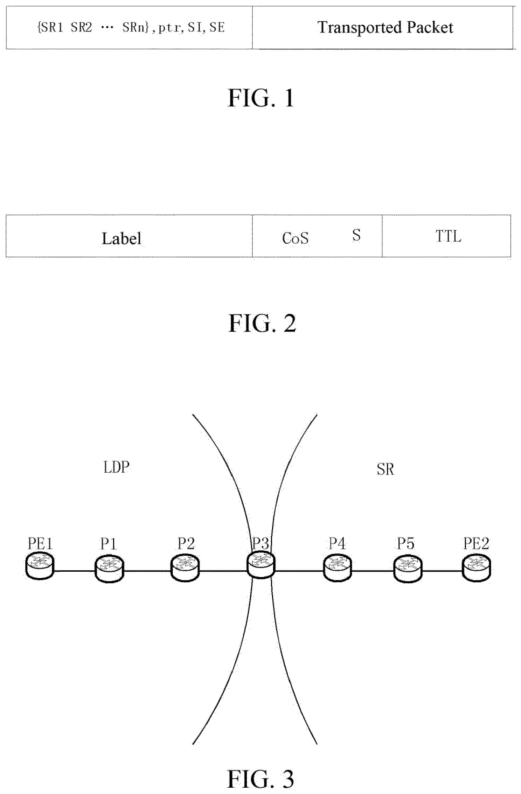

Segment routing is a source address based routing method in which by superimposing one layer of node information affecting the existing shortest path forwarding outside data messages, the messages are forwarded through the shortest path according to this specified path node information carried outside the data messages. As shown in FIG. 1, when a message containing a segment routing message header is transmitted in an SR network domain, a network device (typically a router) performs corresponding operations in accordance with segment operating instructions, including Push, Next and Continue, in the segment routing message header by means of the specified SR node path information carried in the segment routing header. When the operation instruction is the PUSH operation, the network device (typically a router) will push the segment routing message header (SR header) into an IP message, or add other segment instructions in the segment routing message header. The Next and Continue operations show through a pointer of Ptr that the pointer moves to the next segment when it is determined that the current segment operation has been completed, and the segment to which the pointer points is indicated to be an active segment for forwarding the next hop. The Continue operation means that the segment operation has been over and the pointer still stays on the current segment. Complex network functions such as load balancing and process engineering of networks as well as fast rerouting can be implemented very conveniently through the path forwarding function specified by the SR. The segment operation instructions may also be extended to implement routing instructions based on service or topology, and the segment routing may also implement applications such as service based network virtualization and OAM.

The segment routing technology take full advantage of the existing multi-protocol label switching (MPLS) encapsulation technology, and a segment routing header is carried in a message header in the existing MPLS network or in an IPv6 message header. FIG. 2 is a format of the MPLS message header, which consists of 32bits (4 bytes), in which 20bits are a label field, 3bits are a CoS field for indicating a priority of a message, 1bit is a stack bottom flag used for an MPLS-embedded operation, and 8bits are a time-to-live (TTL) field used for TTL count in an MPLS network. The segment routing technology can be fully compatible with and inherit the existing MPLS forwarding data plane, such that the segment routing forwarding can be achieved without modifying the MPLS message header.

Specifically, in MPLS data encapsulation, a segment list in the SR Header is described in a manner of label stack, wherein SR Ptr points to the active segment corresponding to a top-level label in the MPLS label stack; the CONTINUE operation defined for the SR Header in the SR corresponds to a label SWAP operation in the MPLS; the SWAP operation of an incoming label and a outgoing label carrying the same label value is performed through a local SR forwarding table; the NEXT operation defined for the SR Header in the SR corresponds to a label POP operation, that is, popping up top-layer label, in the MPLS; and the PUSH operation defined for the SR Header in the SR corresponds to the PUSH operation, that is, pushing a layer of label, in the MPLS.

As illustrated in FIG. 3, in draft-filsfils-spring-segment-routing-ldp-interop-OO, a scene in which the left side network is a label distribution protocol (LDP) is described and the interaction between the LDP and the SR is described. The LDP protocol is enabled on some nodes in a network, and the SR protocol is enabled on other nodes. A round-trip MPLS Tunnel between a PE1 to a PE2 is established through the network to form continuous MPLS encapsulation forwarding. The interaction is implemented specifically by a node P3 supporting the LDP and the SR, and only the mapping between the SR and LDP in-and-out labels (the incoming label and outgoing label) on the P3 is required to be performed, meanwhile when traffic is sent from the PE2 to the PE1, the destination PE1 is required to be searched for through the SR, at which point, one node is required to bear issuing of a virtual SR ID. This node, called segment routing mapping server (SRMS), is used to distribute SR identifications to nodes not supporting the SR to identify destination addresses in forwarding of SR network messages.

Only the technical scheme of the interaction between nodes in the SR domain and nodes in the LDP domain is provided in the related art. However, for a network in which nodes in the resource reservation protocol (RSVP) domain and nodes in the SR domain coexist, because the nodes in one of the domains cannot automatically perceive address information of the nodes in the other domain, the data transmission between the nodes in the RSVP domain and the nodes in the SR domain cannot be completed.

In a network in which the nodes in the RSVP domain and the nodes in the SR domain coexist in the related art, effective solutions to the problem that the nodes in one of the domains cannot automatically perceive address information of the nodes in the other domain have not been proposed yet.

The document FILSFILS C ET AL: "Segment routing with MPLS data plane; draft-filsfils-spring-segment-routing-mpls-02.txt", SEGMENT ROUTING WITH MPLS DATA PLANE; XP015099430 and the document CN 101026591A have disclosed the related art of the present invention.

### Summary

The present invention is defined by the independent claims, to which reference should now be made. Specific embodiments are defined by the dependent claims.

An embodiment of the present document provides a method and apparatus for forwarding data flow to solve the problem in the related art that in a network in which nodes in a RSVP domain and nodes in a SR domain coexist, the nodes in one of the domains cannot automatically perceive address information of nodes in the other domain.

According to one aspect of the present document, a method for issuing address information is provided and including: a first node that supports a segment routing (SR) and resource reservation protocol (RSVP) issuing address information of SR nodes to a RSVP domain; and the first node announcing address information of RSVP nodes to a segment routing management server (SRMS) in a SR domain;
wherein the first node issuing the address information of the SR nodes to the RSVP domain comprises: the first point flooding the address information of the SR nodes via database extension of an interior gateway protocol (IGP) TE;
wherein the first node announcing the address information of the RSVP nodes to the SRMS in the SR domain comprises: the first point announcing the address information of the RSVP nodes through internal gateway protocol (IGP) extension or through interactive protocol extension of the first node and the SRMS.

Alternatively, the first node issuing the address information of the SR nodes to the RSVP domain includes: in the case that the first node obtains identification information of provider edge routers (PEs) in the SR domain, the first node issuing address information of the PEs to the RSVP domain; and/or the first node issuing the address information of all of the SR nodes in the SR domain to the RSVP domain.

Alternatively, after the first node issues the address information of the SR nodes to the RSVP domain, the method further includes: when nodes in the RSVP domain establish a traffic engineering (TE) tunnel of which destination address is the SR nodes to the SR domain, the first node mapping a first label distributed to the TE tunnel to a first SR identification (ID) corresponding to the destination address of the TE tunnel, and sending one pair of incoming and outgoing label mapping entries formed by the first label and the first SR ID to a label forwarding table in a forwarding plane.

Alternatively, the method further includes: when the first node receives a data flow from the RSVP domain to the SR domain, through the mapping entries in the label forwarding table in the forwarding plane, converting a RSVP label in the data flow into a SR label to be forwarded.

Alternatively, when the nodes in the RSVP domain establish the traffic engineering (TE) tunnel of which destination address is the SR nodes to the SR domain, the method further includes: the first node receiving a PATH message from the TE tunnel and replying a reservation (RESV) message, wherein a label distributed by the first node to upstream encapsulation is carried in the RESV message, and a value of the label is not a label value of a pop-up label.

Alternatively, the method further includes: the first node receiving a message carrying identifications of PEs sent by the PEs in the SR domain; and the first node obtaining a protocol supported by the PEs from the message or by querying a RSVP database or an SR database.

Alternatively, the first node announcing the address information of the RSVP nodes to the SRMS in the SR domain includes: in the case that the first node obtains the identification information of the PEs in the RSVP domain, the first node announcing the address information of the PEs to the SRMS; and/or the first node announcing address information of all of the RSVP nodes in the RSVP domain to the SRMS.

Alternatively, after the first node announces the address information of the RSVP nodes to the SRMS in the SR domain, the method further includes: receiving a SR ID assigned by the
SRMS to each of the RSVP nodes in the RSVP domain; and for each of the RSVP nodes, establishing a TE tunnel to the RSVP node, mapping the SR ID corresponding to the RSVP node to a label of a next hop node established for the TE tunnel, and sending one pair of incoming and outgoing label mapping entries formed by the SR ID and the label to the label forwarding table in the forwarding plane.

Alternatively, the method further includes: when the first node receives a data flow forwarded from the SR domain to the RSVP domain, through the mapping entries in the label forwarding table in the forwarding plane, converting a SR label in the data flow into a RSVP label to be forwarded.

Alternatively, the method further includes: the first node receiving a message carrying identifications of provider edge routers (PEs) sent by the PEs in the RSVP domain; and the first node obtaining a protocol supported by the PEs from the message or by querying a RSVP database or an SR database.

According to another aspect of the present document, an apparatus for issuing address information is provided, the apparatus being located at a first node that supports a segment routing (SR) and resource reservation protocol (RSVP) and including: an issuing module arranged to issue address information of SR nodes to a RSVP domain; and an announcing module arranged to announce address information of RSVP nodes to a segment routing management server (SRMS) in a SR domain;
wherein the issuing module issues the address information of the SR nodes to the RSVP domain by flooding the address information of the SR nodes via database extension of an interior gateway protocol (IGP) TE;
wherein the announcing module announces the address information of the RSVP nodes to the SRMS in the SR domain by announcing the address information of the RSVP nodes through internal gateway protocol (IGP) extension or through interactive protocol extension of the first node and the SRMS.

Alternatively, the issuing module issues the address information of the SR nodes by: in the case that identification information of provider edge routers (PEs) in the SR domain is obtained, issuing address information of the PEs to the RSVP domain; and/or issuing the address information of all of the SR nodes in the SR domain to the RSVP domain.

Alternatively, the apparatus further includes: a mapping module arranged to, when nodes in the RSVP domain establish a traffic engineering (TE) tunnel of which destination address is the SR nodes to the SR domain, map a first label distributed to the TE tunnel to a first SR identification (ID) corresponding to the destination address of the TE tunnel; and a sending module arranged to send one pair of incoming and outgoing label mapping entries formed by the first label and the first SR ID to a label forwarding table in a forwarding plane.

Alternatively, the apparatus further includes a first forwarding module arranged to, when a data flow from the RSVP domain to the SR domain is received, through the mapping entries in the label forwarding table in the forwarding plane, convert a RSVP label in the data flow into a SR label to be forwarded.

Alternatively, the apparatus further includes a processing module arranged to receive a PATH message sent from the TE tunnel and reply a reservation (RESV) message, wherein a label distributed by the first node to upstream encapsulation is carried in the RESV message, and a value of the label is not a label value of a pop-up label.

Alternatively, the apparatus further includes: a first receiving module arranged to receive a message carrying identifications of PEs sent by the PEs in the SR domain; and a first obtaining module arranged to obtain a protocol supported by the PEs from the message or by querying a RSVP database or an SR database.

Alternatively, the announcing module announces the address information of the RSVP nodes to the SRMS in the SR domain by: in the case that the identification information of the PEs in the RSVP domain is obtained, announcing the address information of the PEs to the SRMS; and/or announcing address information of all of the RSVP nodes in the RSVP domain to the SRMS.

Alternatively, the apparatus further includes: a second receiving module arranged to receive a SR ID assigned by the SRMS to each of the RSVP nodes in the RSVP domain; and an establishing module arranged to, for each of the RSVP nodes, establish a TE tunnel to the RSVP node, map the SR ID corresponding to the RSVP node to a label of a next hop node established for the TE tunnel, and send one pair of incoming and outgoing label mapping entries formed by the SR ID and the label to the label forwarding table in the forwarding plane.

Alternatively, the apparatus further includes: a second forwarding module arranged to, when receiving a data flow forwarded from the SR domain to the RSVP domain, through the mapping entries in the label forwarding table in the forwarding plane, convert a SR label in the data flow into a RSVP label to be forwarded.

Alternatively, the apparatus further includes: a third receiving module arranged to receive a message carrying identifications of provider edge router (PEs) sent by the PEs in the RSVP domain; and a second obtaining module arranged to obtain a protocol supported by the PEs in the RSVP domain from the message or by querying a RSVP database or an SR database.

According to still another aspect of the present document, a node supporting a segment routing (SR) and resource reservation protocol (RSVP) is provided and including the apparatus for issuing address information described above.

According to still another aspect of the present document, a node device is provided and including a memory arranged to store codes executing the method for issuing address information described above and a processor arranged to execute the codes stored in the memory.

Through the embodiment of the present document, a node supporting the RSVP and the SR sends the address information of the SR nodes to the RSVP domain, and announces the address information of the RSVP nodes, thus solving the problem in the related art that the RSVP domain or the SR domain cannot obtain the address information of the corresponding nodes, and enabling data transmission between the RSVP nodes and the SR nodes.

### Brief Description of the Drawings

The accompanying drawings described herein are intended to provide a further understanding of the present document and form a part of the present application. The illustrative embodiments of the present document and the description thereof are used to explain the present document and not limit the present document inappropriately. In the accompanying drawings:
FIG. 1 is an example of a format of a SR message header in the related art;
FIG. 2 is an example of a format of a MPLS message header in the related art;
FIG. 3 is a schematic diagram of a network topology in which an area supporting the LDP and an area supporting the SR coexists;
FIG. 4 is a schematic diagram of a network topology in which an area supporting the RSVP and an area supporting the SR coexists;
FIG. 5a is a flow chart of a method for issuing address information in accordance with an embodiment of the present document;
FIG. 5b is a flow chart of a method for issuing address information in accordance with an alternative embodiment of the present document;
FIG. 6 is a schematic diagram of a structure of an apparatus for issuing address information in accordance with an embodiment of the present document; and
FIG. 7 is a schematic diagram of a structure of an apparatus for issuing address information in accordance with an alternative embodiment of the present document.

### Preferred Embodiments of the Document

Hereinafter, the present document will be described in detail below in conjunction with the accompanying drawings and embodiments. It should be noted that, in the case of no conflict, embodiments and features in the embodiments of the present application may be combined with each other.

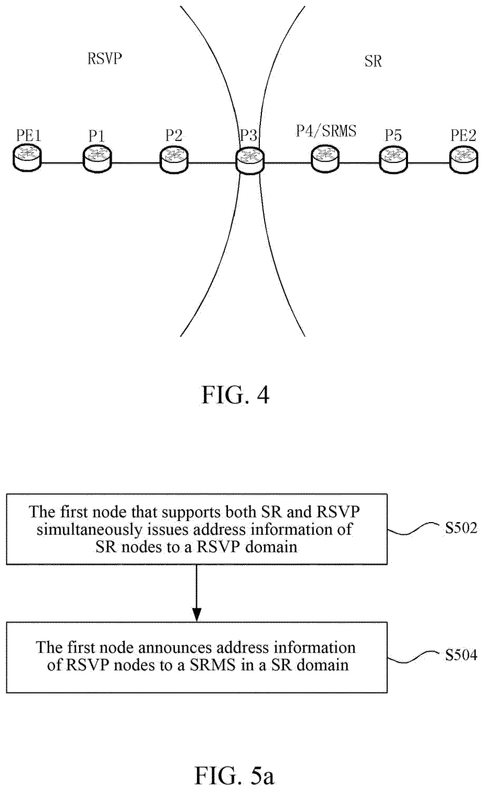

The technical scheme provided by the embodiment of the present document is based on application of a network in which an area supporting the RSVP and an area supporting the SR coexist. FIG. 4 is a schematic diagram of a schematic diagram of a network topology in which an area supporting the RSVP and an area supporting the SR coexists. As shown in FIG. 4, a RSVP protocol is enabled on some nodes in a network, and an SR protocol is enabled on other nodes. A node P3 supporting the SR and the RSVP perceives node information in RSVP and SR domains, and notifies address information of the nodes in one of the domains to the other domain, such that when a TE tunnel is established from a PE1 to a PE2, the establishment of the tunnel can be successfully supported on the P3; and a TE tunnel to the PE1 can be pre-established successfully on the P3, thereby implementing forwarding from the SR to the RSVP.

According to an embodiment of the present document, a method for issuing address information is provided.

FIG. 5a is a flow chart of a method for issuing address information in accordance with an embodiment of the present document. As shown in FIG. 5a, the method mainly includes the following steps S502 and S504.

In step S502, a first node that supports the SR and resource reservation protocol issues address information of SR nodes to a RSVP domain.

The SR nodes can be provider edge routers (PEs) in the SR domain, or all nodes in the SR domain. In the case that the first node obtains identification information of the PEs in the SR domain, the first node can only issue the address information of the PEs to the RSVP domain, so as to economize the issued information. Alternatively, the first node may also issue the address information of all of the SR nodes in the SR domain to the RSVP domain.

Alternatively, the first node receives a message carrying identifications of the PEs sent by the PEs in the SR domain; and the first node obtains the protocol supported by the PEs from the message or by querying a RSVP database and an SR database. Thus the first node can obtain the identification information of the PEs and determines the protocol supported by the PEs.

Alternatively, the first node may flood address information of the SR nodes through database extension of an interior gateway protocol (IGP) TE so as to issue the address information of the SR nodes to the RSVP domain.

In an alternative embodiment of the present document, after the first node issues the address information of the SR nodes to the RSVP domain, when nodes in the RSVP domain establish a traffic engineering (TE) tunnel of which destination address to the SR domain is the SR nodes, the first node maps a first label distributed to the TE tunnel to a first SR identification (ID) corresponding to the destination address of the TE tunnel, and send one pair of incoming and outgoing label mapping entries formed by the first label and the first SR ID to a label forwarding table in a forwarding plane, thereby enabling the forwarding of a data traffic from the RSVP domain to the SR domain.

In an alternative embodiment of the present document, the method may further include: when the first node receives a data flow from the RSVP domain to the SR domain, through the mapping entries in the label forwarding table in the forwarding plane, converting a RSVP label in the data flow into a SR label to be forwarded.

In an alternative embodiment of the present document, when the nodes in the RSVP domain establish the traffic engineering (TE) tunnel of which destination address to the SR domain is the SR nodes, the method further includes: the first node receiving a PATH message sent from the TE tunnel and replying a reservation (RESV) message, wherein a label distributed by the first node to upstream encapsulation is carried in the RESV message, and a value of the label is not a label value of a pop-up label.

In step S504, the first node announces address information of RSVP nodes to an SRMS in the SR domain.

The RSVP nodes in the step S504 may be PEs in the RSVP domain, or all nodes in the RSVP domain. Thus, in an alternative embodiment of the present document, the first node announcing the address information of the RSVP nodes to the SRMS in the SR domain includes: in the case that the first node obtains the identification information of the PEs in the RSVP domain, the first node announcing the address information of the PEs to the SRMS; and/or the first node announcing address information of all of the RSVP nodes in the RSVP domain to the SRMS.

In an alternative embodiment of the present document, after the first node announces the address information of the RSVP nodes to the SRMS in the SR domain, the method further includes: receiving a SR ID assigned by the SRMS to each of the RSVP nodes in the RSVP domain; and for each of the RSVP nodes, establishing a TE tunnel to the RSVP node, mapping the SR ID corresponding to the RSVP node to a label of a next hop node established for the TE tunnel, and sending one pair of incoming and outgoing label mapping entries formed by the SR ID and the label to the label forwarding table in the forwarding plane.

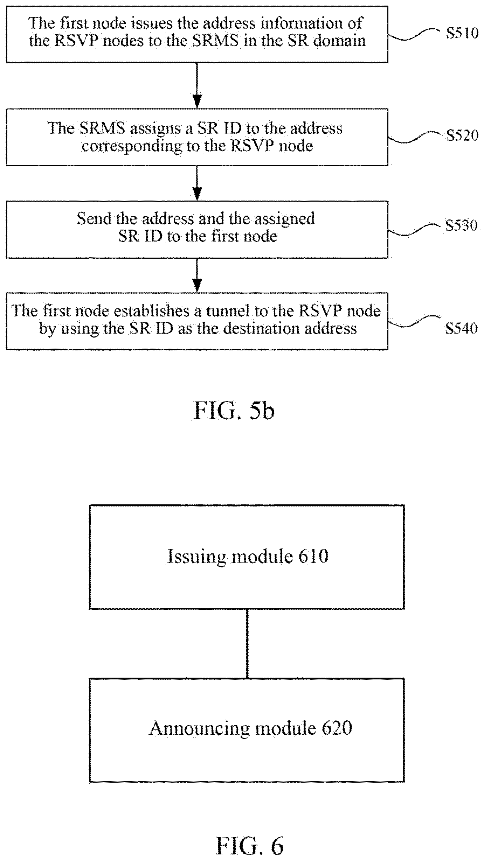

FIG. 5b is a flow chart of an alternative embodiment of the present document. Taking a RSVP node as an example, as shown in FIG. 5b, the first point issues the address information of the RSVP node to the SRMS in the SR domain in step S510, the SRMS assigns a SR ID to the address corresponding to the RSVP node (step S520) and sends the address and the assigned SR ID to the first node (step S530), and the first node establishes a tunnel to the RSVP node by using the SR ID as the destination address (step S540).

In an alternative embodiment of the present document, the method may further include: when the first node receives a data flow forwarded from the SR domain to the RSVP domain, through the mapping entries in the label forwarding table in the forwarding plane, converting a SR label in the data flow into a RSVP label to be forwarded.

Alternatively, the first node announcing the address information of the RSVP nodes to the SRMS in the SR domain includes: the first point announcing the address information of the RSVP nodes through internal gateway protocol (IGP) extension or through interactive protocol extension of the first node and the SRMS.

Alternatively, the method may further include: the first node receiving a message carrying identifications of provider edge routers (PEs) sent by the PEs in the RSVP domain; and the first node obtaining a protocol supported by the PEs from the message or by querying a RSVP database or an SR database.

In a specific implementation process, the steps S502 and S504 described above can be executed out of order in time, that is to say, the step S502 can be executed first, or the step S504 can be executed first, or the step S502 and the step S504 can be executed simultaneously, the specific embodiments of the present document will not be discussed herein.

According to an embodiment of the present document, an apparatus for issuing address information is provided, the apparatus being located in a first node supporting the segment route (SR) and the resource reservation protocol (RSVP).

FIG. 6 is a schematic diagram of a structure of an apparatus for issuing address information in accordance with an embodiment of the present document. As shown in FIG. 6, the apparatus mainly includes: an issuing module 610 arranged to issue address information of SR nodes to a RSVP domain; and an announcing module 620 arranged to announce address information of RSVP nodes to a segment routing management server (SRMS) in a SR domain.

Alternatively, the issuing module may issue the address information of the SR nodes by: in the case that identification information of provider edge routers (PEs) in the SR domain is obtained, issuing address information of the PEs to the RSVP domain; and/or issuing the address information of all of the SR nodes in the SR domain to the RSVP domain.

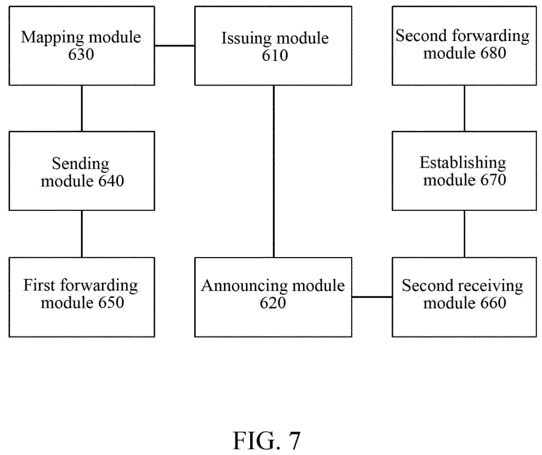

Alternatively, as shown in FIG. 7, the apparatus may further include: a mapping module 630 arranged to, when nodes in the RSVP domain establish a traffic engineering (TE) tunnel of which destination address to the SR domain is the SR nodes, map a first label distributed to the TE tunnel to a first SR identification (ID) corresponding to the destination address of the TE tunnel; and a sending module 640 arranged to send one pair of incoming and outgoing label mapping entries formed by the first label and the first SR ID to a label forwarding table in a forwarding plane.

Alternatively, as shown in FIG. 7, the apparatus may further include a first forwarding module 650 arranged to, when a data flow from the RSVP domain to the SR domain is received, through the mapping entries in the label forwarding table in the forwarding plane, convert a RSVP label in the data flow into a SR label to be forwarded.

Alternatively, the apparatus may further include a processing module arranged to receive a PATH message sent from the TE tunnel and reply a reservation (RESV) message, wherein a label distributed by the first node to upstream encapsulation is carried in the RESV message, and a value of the label is not a label value of a pop-up label.

Alternatively, the issuing module 610 issues the address information of the SR nodes to the RSVP domain by flooding the address information of the SR nodes via database extension of an interior gateway protocol (IGP) TE.

Alternatively, the apparatus may further include: a first receiving module arranged to receive a message carrying identifications of PEs sent by the PEs in the SR domain; and a first obtaining module arranged to obtain a protocol supported by the PEs from the message or by querying a RSVP database or an SR database.

Alternatively, the announcing module 620 announces the address information of the RSVP nodes to the SRMS in the SR domain by: in the case that the identification information of the PEs in the RSVP domain is obtained, announcing the address information of the PEs to the SRMS; and/or announcing address information of all of the RSVP nodes in the RSVP domain to the SRMS.

Alternatively, as shown in FIG. 7, the apparatus may further include: a second receiving module arranged to receive a SR ID assigned by the SRMS to each of the RSVP nodes in the RSVP domain; and an establishing module 670 arranged to, for each of the RSVP nodes, establish a TE tunnel to the RSVP node, map the SR ID corresponding to the RSVP node to a label of a next hop node established for the TE tunnel, and send one pair of incoming and outgoing label mapping entries formed by the SR ID and the label to the label forwarding table in the forwarding plane.

Alternatively, the apparatus further includes: a second forwarding module 680 arranged to, when receiving a data flow forwarded from the SR domain to the RSVP domain, through the mapping entries in the label forwarding table in the forwarding plane, convert a SR label in the data flow into a RSVP label to be forwarded.

Alternatively, the announcing module 620 may announce the address information of the RSVP nodes to the SRMS in the SR domain by announcing the address information of the RSVP nodes through internal gateway protocol (IGP) extension or through interactive protocol extension of the first node and the SRMS.

Alternatively, the apparatus may further include: a third receiving module arranged to receive a message carrying identifications of provider edge router (PEs) sent by the PEs in the RSVP domain; and a second obtaining module arranged to obtain a protocol supported by the PEs in the RSVP domain from the message or by querying a RSVP database or an SR database.

According to an embodiment of the present document, a node supporting the segment routing (SR) and resource reservation protocol (RSVP). The node includes the apparatus for issuing address information described above.

According to an embodiment of the present document, a node device is provided and including a memory arranged to store codes executing the method for issuing address information described above and a processor arranged to execute the codes stored in the memory.

In the technical scheme provided by the embodiment of the present document, label mapping of the SR and the RSVP is automatically formed on the nodes supporting the SR and the RSVP, thereby implementing forwarding of the data traffic between the SR and the RSVP.

The technical scheme provided by the embodiment of the present document may be implemented as follows:
In the control plane, nodes (hereinafter referred to as the first node) supporting the SR and the RSVP issue address information (such as, IP address information) of the nodes within the SR domain to the RSVP domain via the extension. For example, the address information of the nodes in the SR domain can be extended and flooded by storing it in an database of the IGP TE, so as to successfully establish the TE tunnel from the RSVP side to the nodes in the SR domain. After the tunnel to the first node is successfully established, according to unique matching of the destination IP address of the TE tunnel, the label issued by the first node to which the tunnel is established is mapped to the SR ID of the IP address, and a pair of incoming and outgoing label mapping entries formed by the label and the SR ID is sent to the label forwarding table in the forwarding plane.

In addition, the first node also is required to announce information of the nodes in the RSVP domain to the SRMS in the SR domain, and the SRMS then assigns a unique SR ID to each of the nodes in the RSVP domain, and announces a mapping message of the assigned RSVP node and the SR ID in the SR domain. After the nodes supporting the SR and the RSVP receive the mapping message, a TE tunnel to each of the RSVP nodes is established. Similarly, the node also maps the SR ID corresponding to the information of the node to the label of the next hop when a TE tunnel of which the destination address is the SR ID is established according to the unique match of the information of the node, and sends a pair of incoming and outgoing label mapping entries formed by the SR ID and the label to the label forwarding table in the forwarding plane.

Therefore, in the data plane, when there is traffic forwarded from the RSVP domain to the SR domain, the normal MPLS formed by the pre-distributed mapping entries in the label mapping table in the forwarding plane is forwarded; when there is traffic forwarded from the SR domain to the RSVP domain, the normal MPLS formed by the pre-distributed mapping entries in the label mapping table in the forwarding plane is forwarded

In the embodiment of the present document, the node device supporting the SR and the RSVP can obtain simultaneously relevant node IP information in the SR network and relevant node IP information in the RSVP network, whereby the device assumes similar gateway proxy functions in the SR and RSVP networks.

In the embodiment of the present document, the proxy functions of the node device supporting the SR and the RSVP mainly includes:
For a proxy where the traffic is sent in the direction from the SR network to the RSVP network,
(1) Its main responsibility is to send IP address information of the nodes in the SR network to the RSVP domain, which, specifically, can be extended and carried via signaling of the IGP TE. To support successful establishment of a TE Tunnel to the address of the nodes within the SR domain initiated at the RSVP side, a PATH message from the TE Tunnel will be terminated at the module, and a RESV message will be replied. When a label locally distributed to the upstream encapsulation is carried in the RESV message, it cannot be a label value of a pop-up label 3.
(2) After the TE Tunnel is established successfully, at the device control plane, a pair of label mapping entries will be formed by a local label of the TE Tunnel formed according to the IP address of the nodes and a SR ID assigned to the IP address.
(3) The label mapping entries are sent to the label forwarding table in the forwarding plane.
(4) When there is MPLS traffic in the data plane sent from the RSVP domain to the SR domain along the TE Tunnel, the SR label which is directly converted from the RSVP label according to the label forwarding entries in the forwarding plane is forwarded.

2. For a proxy where the traffic is sent in the direction from the RSVP network to the SR network:
(1) Its main responsibility is to send IP address information of the nodes in the RSVP network to the SRMS in the SR domain, which, specifically, can be extended and carried via signaling of the IGP, or can be extended via a protocol running between the SRMS and the device.
(2) After receiving the extension, the SRMS assigns a unique SR ID value to each of the IP addresses in the domain.
(3) The SRMS sends the IP address and the assigned SR ID value to the node device supporting the SR and the RSVP.
(4) After receiving the mapping of the IP addresses to the assigned SR ID, the node device establishes multiple corresponding TE Tunnels of destination addresses are the IP addresses in the RSVP network.
(5) After the Tunnels are established successfully, at the control plane, a pair of label mapping entries is formed by SR IDs corresponding to the same IP address and RSVP labels of the next hops of their TE Tunnels.
(6) The label mapping entries are sent to the label forwarding table in the forwarding plane.
(7) Where there is MPLS traffic sent from the SR domain to the RSVP domain at the data plane, the RSVP label which is directly converted from the SR label according to the label forwarding entries in the forwarding plane is forwarded.

The technical scheme provided by the embodiment of the present document will be described below through specific embodiments.

### The first embodiment

The present embodiment describes the specific forwarding of data traffic from the SR network side to the RSVP network side, that is, the forwarding of the traffic from a PE2 to a PE1 in FIG. 4, specific implementation steps of which are as follows:
In step 1, in the SR domain, the specified Global SR label range is (101 to 200), and SR IDs 102, 103, 104 and 105 are assigned to the SR nodes PE2 and P3, P4 and P5.
In step 2, in order to complete lookup of the SR nodes between the end-to-end PEs, IP address information of nodes not supporting the SR function (i.e., nodes supporting the RSVP, except itself) is issued to the SRMS P4 through the IGP protocol extension on the P3 (the SRMS is also managed uniformly by an external controller or a server, the protocol between the device node and the SRMS can be an I2RS designated protocol, PCEP, BGP-LS or OpenFlow protocol, whereby the IP address information of the nodes with the non-SR function is carried via the extension of the interactive protocol between the specific device and the SRMS).
In step 3, the unique SR IDs 101, 111 and 112 in the domain are assigned by the P4 to the nodes PE1, P1 and P2 in the non-SR domain respectively.
In step 4, the SRMS sends the mapping information to the SR nodes in the domain, and the mapping of the nodes in the non-SR domain is specifically represented as (PE1,101), (P 1,111), (P2,112), wherein PE1, P1 and P2 are generally indicated through the IP address of its loopback interface.
In step 5, when the node P3 supporting the SR and the RSVP receives this mapping information, it is known that these nodes do not support the SR, and destination addresses of three TE tunnels to the PE1, the P1 and the P2 are established respectively.
In step 6, in a process of the establishment of the TE Tunnels, the P3 will receive a RESV message sent by the next hop P2 of each of the TE Tunnels. A label value assigned by the P2 to each TE Tunnel encapsulation on the P3 is carried in the message. For example, the label carried by the TE Tunnel of which the destination is the PE1 is label 1, the corresponding label when the destination is the P1 is label2, and the corresponding label when the destination is the P2 is label3, such that MPLS messages is encapsulated and forward on the P3.
In step 7, the control plane maps the incoming label of which a SR ID is 101 to the label 1 to be forwarded to the forwarding plane, the control plane maps the incoming label of which a SR ID is 111 to the label2 to be forwarded to the forwarding plane, and the control plane maps the incoming label of which a SR ID is 112 to the label3 to be forwared to the forwarding plane, thereby achieving uniform encapsulation and forwarding of mpls traffic.
In step 8, specifically when the traffic is sent from the PE2 to the PE1, the following steps are performed:
   (1) When SR encapsulation is performed on the PE2, the 101 label is carried by the outer-layer encapsulation.
   (2) The PE2, the P5 and the P4 forward the SR to the P3. (At this place the penultimate hop cannot be performed, and for a SR ID announced by a remote-binding node, the penultimate hop cannot be allowed.)
   (3) The P3 searches out the outgoing label of the label1 of the RSVP provided by the P2 according to the incoming label of the SR ID 101 through the preset mapping of the SR label 101 to the RSVP label label1, and then performs the RSVP TE forwarding.
   (4) The P2 and the P1 perform the normal RSVP TE forwarding to the PE1.
   (5) The PE1 performs traffic forwarding.

### The second embodiment

The present embodiment describes the specific forwarding of data traffic from the RSVP network side to the SR network side, that is, the forwarding of the traffic from a PE2 to a PE1 in FIG. 4, specific implementation steps of which are as follows:
In step 1, the assignment of the SR IDs in the SR domain in this step is the same as the description of the step 1 in the first embodiment.
In step 2, the node P3 supporting the SR and the RSVP writes the IP address of each of the nodes in the SR domain to a TE database through the protocol extension by perception of the IP address information of the nodes in the SR network, and announces it to the nodes in the RSVP domain. Therefore, when the PE1 knows that the PE2 has the same VPN, and a TE tunnel to the PE2is established on the PE1, since right-side networks such as the PE2 do not support the RSVP, a CSPF algorithm is performed through this announcement before a PATH message created on the TE tunnel is sent. After the CSPF algorithm is completed, the PATH message is terminates on the P3 and a RESV message is replied. The label11 locally assigned to the upstream node P2 encapsulation is carried in the RESV message. It is noted that the label11 is not the label 3 of the penultimate hop. Thus the tunnel on the PE1 is established successfully, and its destination address is an address to the PE2, but in fact the TE tunnel terminates on the P3.
In step 3, the mapping of the RSVP label of the PE2 related TE tunnel to the SR label (label11,102) is performed on the P3. The control plane maps the incoming label of the RSVP label11 to the outgoing label of the SR ID 102 to be forwarded to the forwarding plane, thereby achieving the uniform encapsulation and forwarding of mpls traffic.
In step 4, specifically when the traffic is sent from the PE1 to the PE2, the following steps are performed:
   (1) When MPLS encapsulation is performed on the PE1, the next-hop label of the te tunnel is carried by the outer-layer encapsulation.
   (2) The PE1, the P1 and the P2 perform the forwarding of the RSVP to the P3.
   (3) The P3 searches out the outgoing label of SR ID 102 according to the incoming RSVP label2 of the TE TUNNEL through the preset mapping of the RSVP label11 to the SR label 102 on the P3, and subsequently performs the SR forwarding.
   (4) The P4 and the P5 performs the normal SR forwarding to the PE2.
5, The PE2 performs the traffic forwarding

### The third embodiment

The present embodiment describes the nodes supporting the SR and the RSVP perceiving and obtaining information of PE nodes. The perception of the PE nodes can reduce the capacity of the TE database and the number of the established TE Tunnels initiated on the nodes supporting the SR and the RSVP, and reduce the number of mapping entries of the corresponding SR ID to the RSVP label.

In the present embodiment, the PE node supported by the VPN carries its own ID message through the extension of the IGP protocol and optionally carries the protocol supported by itself. Only after the node supporting the SR and the RSVP receives the extension, according to the protocol supporting condition sent by the PE or the local support and acquisition of the protocol by the PE (obtained by querying a RSVP database and an SR database), different actions are performed on the interactive node, that is, based on the PE node from the RSVP domain, only the IP address of the TE tunnel to the PE is required to be created; based on the PE node from the SR domain, the IP address information of the PE node is written into the TE database of the interactive node and flooded through the protocol extension.

For example, in FIG. 4, when the interactive node P3 receives a PE2 message indicating that it is a PE and only supports the SR protocol, only the address of the PE2 is written into the TE database and flooded on the P3 so as to complete CSPF calculation before the TE TUNNEL to the PE2 is established on the PE1, thereby achieving the termination of the PATH message at the end node PE2 and direct reply of a RESV message to complete the calculation of the TE Tunnel from the PE1. When the P3 receives a PE1 message indicating that it is a PE and only supports the RSVP protocol, only a TE tunnel of which the end point is the PE1 is required to be established locally, so as to achieve label interworking of the SR to RSVP tunnel.

From the above description, it can be seen that in the embodiment of the present document, the relevant node IP information in the SR network and the relevant node IP information in the RSVP network can be obtained at the same time in the node device supporting the SR and the RSVP, whereby the device assumes similar gateway proxy functions in the SR and RSVP networks and automatically achieves the SR and RSVP label mapping, so as to implement forwarding of the data traffic between the SR and the RSVP.

Obviously, those skilled in the art should understand that various modules or steps of the present document described above may be implemented by general-purpose computing devices that may be centralized on a single computing device or distributed over a network consisting of a plurality of computing devices. Optionally, the modules or steps may be implemented by program codes executable by the computing devices such that they may be stored in storage devices and executed by the computing devices. Moreover, in some cases, the steps shown or described may be performed in an order different from that shown herein. Or the modules or steps can be made separately into individual integrated circuit modules, or some of them can be made into a single integrated circuit module. Thus, the present document is not limited to any particular combination of hardware and software.

### Industrial Applicability

As described above, a method and apparatus for issuing address information provided by the embodiment of the present document have the following beneficial effects: nodes supporting the RSVP and the SR send address information of SR nodes to the RSVP domain, and announce the address information of the RSVP nodes, thus enabling data transmission between the RSVP nodes and the SR nodes.

## Claims

1. A method for issuing address information **characterized by** comprising:
a first node that supports a segment routing, SR, and resource reservation protocol, RSVP, issuing (S502) address information of SR nodes to a RSVP domain; and
the first node announcing (S504) address information of RSVP nodes to a segment routing management server, SRMS, in a SR domain;
wherein the first node issuing the address information of the SR nodes to the RSVP domain comprises: the first point flooding the address information of the SR nodes via database extension of an interior gateway protocol, IGP, TE;
wherein the first node announcing the address information of the RSVP nodes to the SRMS in the SR domain comprises: the first point announcing the address information of the RSVP nodes through internal gateway protocol, IGP, extension or through interactive protocol extension of the first node and the SRMS.

2. The method according to claim 1, wherein after the first node issues the address information of the SR nodes to the RSVP domain, the method further comprises:
when nodes in the RSVP domain establish a traffic engineering, TE, tunnel of which destination address is the SR nodes to the SR domain, the first node mapping a first label distributed to the TE tunnel to a first SR identification, ID, corresponding to the destination address of the TE tunnel, and sending one pair of incoming and outgoing label mapping entries formed by the first label and the first SR ID to a label forwarding table in a forwarding plane.

3. The method according to claim 2, wherein the method further comprises:
when the first node receives a data flow from the RSVP domain to the SR domain, through the mapping entries in the label forwarding table in the forwarding plane, converting a RSVP label in the data flow into a SR label to be forwarded;
when the nodes in the RSVP domain establish the traffic engineering, TE, tunnel of which destination address is the SR nodes to the SR domain, the method further comprises: the first node receiving a PATH message from the TE tunnel and replying a reservation, RESV, message, wherein a label distributed by the first node to upstream encapsulation is carried in the RESV message, and a value of the label is not a label value of a pop-up label.

4. The method according to claim 1, wherein after the first node announces the address information of the RSVP nodes to the SRMS in the SR domain, the method further comprises:
receiving a SR ID assigned by the SRMS to each of the RSVP nodes in the RSVP domain; and
for each of the RSVP nodes, establishing a TE tunnel to the RSVP node, mapping the SR ID corresponding to the RSVP node to a label of a next hop node established for the TE tunnel, and sending one pair of incoming and outgoing label mapping entries formed by the SR ID and the label to the label forwarding table in the forwarding plane.

5. The method according to claim 4, wherein the method further comprises:
when the first node receives a data flow forwarded from the SR domain to the RSVP domain, through the mapping entries in a label mapping forwarding in the forwarding plane, converting a SR label in the data flow into a RSVP label to be forwarded.

6. The method according to claim 1, wherein the method further comprises:
the first node receiving a message carrying identifications of provider edge routers, PEs, sent by the PEs in the RSVP domain; and
the first node obtaining a protocol supported by the PEs from the message or by querying a RSVP database or an SR database.

7. An apparatus for issuing address information, the apparatus being located at a first node that supports a segment routing, SR, and resource reservation protocol, RSVP, and being **characterized by** comprising:
an issuing module (610) arranged to issue address information of SR nodes to a RSVP domain; and
an announcing module (620) arranged to announce address information of RSVP nodes to a segment routing management server, SRMS, in a SR domain;
wherein the issuing module (610) issues the address information of the SR nodes to the RSVP domain by flooding the address information of the SR nodes via database extension of an interior gateway protocol, IGP, TE;
wherein the announcing module (620) announces the address information of the RSVP nodes to the SRMS in the SR domain by announcing the address information of the RSVP nodes through internal gateway protocol, IGP, extension or through interactive protocol extension of the first node and the SRMS.

8. The apparatus according to claim 7, further comprising:
a mapping module (630) arranged to, when nodes in the RSVP domain establish a traffic engineering, TE, tunnel of which destination address is the SR nodes to the SR domain, map a first label distributed to the TE tunnel to a first SR identification, ID, corresponding to the destination address of the TE tunnel; and
a sending module (640) arranged to send one pair of incoming and outgoing label mapping entries formed by the first label and the first SR ID to a label forwarding table in a forwarding plane;
further comprising a first forwarding module (650) arranged to, when a data flow from the RSVP domain to the SR domain is received, through the mapping entries in the label forwarding table in the forwarding plane, convert a RSVP label in the data flow into a SR label to be forwarded.

9. The apparatus according to claim 8, further comprising:
a processing module arranged to receive a PATH message sent from the TE tunnel and reply a reservation, RESV, message, wherein a label distributed by the first node to upstream encapsulation is carried in the RESV message, and a value of the label is not a label value of a pop-up label.

10. The apparatus according to claim 7, further comprising:
a first receiving module arranged to receive a message carrying identifications of PEs sent by the PEs in the SR domain; and
a first obtaining module arranged to obtain a protocol supported by the PEs from the message or by querying a RSVP database or an SR database.

11. The apparatus according to claim 7, further comprising:
a second receiving module (660) arranged to receive a SR ID assigned by the SRMS to each of the RSVP nodes in the RSVP domain; and
an establishing module (670) arranged to, for each of the RSVP nodes, establish a TE tunnel to the RSVP node, map the SR ID corresponding to the RSVP node to a label of a next hop node established for the TE tunnel, and send one pair of incoming and outgoing label mapping entries formed by the SR ID and the label to the label forwarding table in the forwarding plane;
further comprising:
a second forwarding module (680) arranged to, when receiving a data flow forwarded from the SR domain to the RSVP domain, through the mapping entries in a label mapping forwarding in the forwarding plane, convert a SR label in the data flow into a RSVP label to be forwarded.

## Patentansprüche

1. Verfahren zum Ausstellen von Adressinformationen, das **dadurch gekennzeichnet ist, dass** es umfasst:
Ausstellen (S502), durch einen ersten Knoten, der ein Segmentroutings-, SR, und Ressourcenreservierungsprotokoll, RSVP, unterstützt, von Adressinformationen von SR-Knoten an eine RSVP-Domäne; und
Melden (S504), durch den ersten Knoten, von Adressinformationen von RSVP-Knoten an einen Segmentroutingsverwaltungsserver, SRMS, in einer SR-Domäne;
wobei der erste Knoten, der die Adressinformationen der SR-Knoten an die RSVP-Domäne ausstellt, umfasst: den ersten Punkt, der die Adressinformationen der SR-Knoten über Datenbankerweiterung eines inneren Gateway-Protokoll-, IGP, TE flutet;
wobei der erste Knoten, der die Adressinformationen der RSVP-Knoten an den SRMS in der SR-Domäne meldet, umfasst: den ersten Punkt, der die Adressinformationen der RSVP-Knoten durch innere Gateway-Protokoll, IGP, Erweiterung oder durch interaktive Protokollerweiterung des ersten Knotens und des SRMS meldet.

2. Verfahren nach Anspruch 1, wobei nachdem der erste Knoten die Adressinformationen der SR-Knoten an die RSVP-Domäne ausgestellt hat, das Verfahren weiter umfasst:
wenn Knoten in der RSVP-Domäne einen Verkehrs-Engineering, TE, Tunnel, dessen Zieladresse die SR-Knoten sind, zur SR-Domäne einrichten, der erste Knoten eine erste Kennzeichnung, die an den TE-Tunnel verteilt wird, auf eine erste SR-Identifikation, ID, entsprechend der Zieladresse des TE-Tunnels abbildet und ein Paar eingehender und ausgehender Kennzeichnungsabbildungseinträge, die durch die erste Kennzeichnung und die erste SR-ID gebildet sind, an eine Kennzeichnungsweiterleitungstabelle in einer Weiterleitungsebene sendet.

3. Verfahren nach Anspruch 2, wobei das Verfahren weiter umfasst:
wenn der erste Knoten einen Datenstrom von der RSVP-Domäne zur SR-Domäne, durch die Abbildungseinträge in der Kennzeichnungsweiterleitungstabelle in der Weiterleitungsebene, empfängt, Umwandeln einer RSVP-Kennzeichnung im Datenstrom in eine SR-Kennzeichnung, die weiterzuleiten ist;
wenn die Knoten in der RSVP-Domäne den Verkehrs-Engineering, TE, Tunnel, dessen Zieladresse die SR-Knoten sind, zur SR-Domäne einrichten, das Verfahren weiter umfasst: dass der erste Knoten eine PATH-Nachricht vom TE-Tunnel empfängt und mit einer Reservierungs-, RESV, Nachricht antwortet, wobei eine Kennzeichnung, die vom ersten Knoten zu einer stromaufwärtigen Einkapselung verteilt wird, in der RESV-Nachricht getragen wird, und ein Wert der Kennzeichnung kein Kennzeichnungswert einer Pop-up-Kennzeichnung ist.

4. Verfahren nach Anspruch 1, wobei, nachdem der erste Knoten die Adressinformationen der RSVP-Knoten an den SRMS in der SR-Domäne gemeldet hat, das Verfahren weiter umfasst:
Empfangen einer SR-ID, die durch den SRMS jedem der RSVP-Knoten in der RSVP-Domäne zugeordnet ist; und
für jeden der RSVP-Knoten, der einen TE-Tunnel zum RSVP-Knoten einrichtet, Abbilden der SR-ID entsprechend dem RSVP-Knoten auf eine Kennzeichnung eines nächsten Hop-Knotens, der für den TE-Tunnel eingerichtet ist, und Senden eines Paares eingehender und ausgehender Kennzeichnungsabbildungseinträge, die durch die SR-ID und die Kennzeichnung gebildet sind, zur Kennzeichnungsweiterleitungstabelle in der Weiterleitungsebene.

5. Verfahren nach Anspruch 4, wobei das Verfahren weiter umfasst:
wenn der erste Knoten einen Datenstrom, der von der SR-Domäne zur RSVP-Domäne weitergeleitet wird, durch die Abbildungseinträge in einer Kennzeichnungsabbildungsweiterleitung in der Weiterleitungsebene empfängt, Umwandeln einer SR-Kennzeichnung im Datenstrom in eine RSVP-Kennzeichnung, die weiterzuleiten ist.

6. Verfahren nach Anspruch 1, wobei das Verfahren weiter umfasst:
den ersten Knoten, der eine Nachricht empfängt, die Identifikationen von Providerrandroutern, PE, trägt, die von den PE in der RSVP-Domäne gesendet wird; und
den ersten Knoten, der ein Protokoll, das von den PE unterstützt wird, aus der Nachricht oder durch Abfragen einer RSVP-Datenbank oder einer SR-Datenbank erhält.

7. Vorrichtung zum Ausstellen von Adressinformationen, wobei die Vorrichtung bei einem ersten Knoten liegt, der ein Segmentroutings-, SR, und Ressourcenreservierungsprotokoll, RSVP, unterstützt und **dadurch gekennzeichnet ist, dass** sie umfasst:
ein Ausstellungsmodul (610), das angeordnet ist, Adressinformationen von SR-Knoten an eine RSVP-Domäne auszustellen; und
ein Meldemodul (620), das angeordnet ist, Adressinformationen von RSVP-Knoten an einen Segmentroutingsverwaltungsserver, SRMS, in einer SR-Domäne zu melden;
wobei das Ausstellungsmodul (610) die Adressinformationen der SR-Knoten an die RSVP-Domäne durch Fluten der Adressinformationen der SR-Knoten über Datenbankerweiterung eines inneren Gateway-Protokoll, IGP, TE ausstellt;
wobei das Meldemodul (620) die Adressinformationen der RSVP-Knoten an den SRMS in der SR-Domäne durch Melden der Adressinformationen der RSVP-Knoten durch innere Gateway-Protokoll-, IGP, Erweiterung oder durch interaktive Protokollerweiterung des ersten Knotens und des SRMS meldet.

8. Vorrichtung nach Anspruch 7, weiter umfassend:
ein Abbildungsmodul (630), das angeordnet ist, wenn Knoten in der RSVP-Domäne einen Verkehr-Engineering-, TE, Tunnel, dessen Zieladresse die SR-Knoten sind, zur SR-Domäne einrichten, eine erste Kennzeichnung, die an den TE-Tunnel verteilt wird, auf eine erste SR-Identifikation, ID, entsprechend der Zieladresse des TE-Tunnels abzubilden; und
ein Sendemodul (640), das angeordnet ist, ein Paar eingehender und ausgehender Kennzeichnungsabbildungseinträge, die durch die erste Kennzeichnung und die erste SR-ID gebildet sind, an eine Kennzeichnungsweiterleitungstabelle in einer Weiterleitungsebene zu senden;
weiter umfassend ein erstes Weiterleitungsmodul (650), das angeordnet ist, wenn ein Datenstrom von der RSVP-Domäne an die SR-Domäne durch die Abbildungseinträge in der Kennzeichnungsweiterleitungstabelle in der Weiterleitungsebene empfangen wird, eine RSVP-Kennzeichnung im Datenstrom in eine SR-Kennzeichnung, die weiterzuleiten ist, umzuwandeln.

9. Vorrichtung nach Anspruch 8, weiter umfassend:
ein Verarbeitungsmodul, das angeordnet ist, eine PATH-Nachricht zu empfangen, die vom TE-Tunnel gesendet ist, und mit einer Reservierungs-, RESV, Nachricht zu antworten, wobei eine Kennzeichnung, die vom ersten Knoten zu einer stromaufwärtigen Einkapselung verteilt wird, in der RESV-Nachricht getragen wird und ein Wert der Kennzeichnung kein Kennzeichnungswert einer Pop-up-Kennzeichnung ist.

10. Vorrichtung nach Anspruch 7, weiter umfassend:
ein erstes Empfangsmodul, das angeordnet ist, eine Nachricht zu empfangen, die Identifikationen von PE trägt, die von den PE in der SR-Domäne gesendet wird; und
ein erstes Erhaltungsmodul, das angeordnet ist, ein Protokoll, das von den PE unterstützt wird, aus der Nachricht oder durch Abfragen einer RSVP-Datenbank oder einer SR-Datenbank zu erhalten.

11. Vorrichtung nach Anspruch 7, weiter umfassend:
ein zweites Empfangsmodul (660), das angeordnet ist, eine SR-ID zu empfangen, die vom SRMS jedem der RSVP-Knoten in der RSVP-Domäne zugeordnet ist; und
ein Einrichtungsmodul (670), das angeordnet ist, für jeden der RSVP-Knoten, einen TE-Tunnel zum RSVP-Knoten einzurichten, die SR-ID entsprechend dem RSVP-Knoten auf eine Kennzeichnung eines nächsten Hop-Knotens abzubilden, der für den TE-Tunnel eingerichtet ist, und ein Paar eingehender und ausgehender Kennzeichnungsabbildungseinträge, die durch die SR-ID und die Kennzeichnung gebildet sind, an die Kennzeichnungsweiterleitungstabelle in der Weiterleitungsebene zu senden;
weiter umfassend:
ein zweites Weiterleitungsmodul (680), das angeordnet ist, wenn es einen Datenstrom empfängt, der von der SR-Domäne an die RSVP-Domäne weitergeleitet ist, durch die Abbildungseinträge in einer Kennzeichnungsabbildungsweiterleitung in der Weiterleitungsebene, eine SR-Kennzeichnung im Datenstrom in eine RSVP-Kennzeichnung umzuwandeln, die weiterzuleiten ist.

## Revendications

1. Procédé de délivrance d'informations d'adresse, **caractérisé en ce qu'**il comprend :
un premier nœud qui supporte un protocole de routage de segments, SR, et de réservation de ressources, RSVP, délivrant (S502) des informations d'adresse de nœuds SR à un domaine RSVP ; et
le premier nœud annonçant (S504) des informations d'adresse de nœuds RSVP à un serveur de gestion de routage de segments, SRMS, dans un domaine SR ;
dans lequel le premier nœud délivrant les informations d'adresse des nœuds SR au domaine SRVP comprend : le premier point qui inonde d'informations d'adresse des nœuds SR via une extension de base de données d'un protocole de passerelle intérieure, IGP, TE;
dans lequel le premier nœud annonçant les informations d'adresse des nœuds RSVP au SRMS dans le domaine SR comprend : le premier point annonçant les informations d'adresse des nœuds RSVP via l'extension de protocole de passerelle interne, IGP, ou via une extension de protocole interactive du premier nœud et du SRMS.

2. Procédé selon la revendication 1, dans lequel, une fois que le premier nœud délivre les informations d'adresse des nœuds SR au domaine RSVP, le procédé comprend en outre :
lorsque les nœuds dans le domaine RSVP établissent un tunnel d'ingénierie de trafic, TE, dont l'adresse de destination est les nœuds SR dans le domaine SR, le premier nœud qui mappe une première étiquette distribuée dans le tunnel TE à une première identification de SR, ID, correspondant à l'adresse de destination du tunnel TE et l'envoi d'une paire d'entrées de mappage d'étiquette entrante et sortante formées par la première étiquette et la première ID de SR à une table d'acheminement d'étiquette dans un plan d'acheminement.

3. Procédé selon la revendication 2, dans lequel le procédé comprend en outre :
lorsque le premier nœud reçoit un flux de données du domaine RSVP dans le domaine SR à travers les entrées de mappage dans la table d'acheminement d'étiquette dans le plan d'acheminement, la conversion d'une étiquette RSVP dans le flux de données en une étiquette SR à acheminer ;
dans lequel les nœuds dans le domaine RSVP établissent le tunnel d'ingénierie de trafic, TE, dont l'adresse de destination est les nœuds SR dans le domaine SR, le procédé comprend en outre : le premier nœud qui reçoit un message PATH du tunnel TE et répond à un message de réservation, RESV, dans lequel une étiquette distribuée par le premier nœud à une encapsulation amont est portée dans un message RESV et une valeur de l'étiquette n'est pas une valeur d'étiquette d'une étiquette en incrustation.

4. Procédé selon la revendication 1, dans lequel, une fois que le premier nœud annonce les informations d'adresse des nœuds RSVP au SRMS dans le domaine SR, le procédé comprend en outre :
la réception d'une ID de SR affectée par le SRMS à chacun des nœuds RSVP dans le domaine RSVP ; et
pour chacun des nœuds RSVP, l'établissement d'un tunnel TE dans le nœud RSVP, le mappage de l'ID de SR correspondant au nœud RSVP avec une étiquette d'un nœud de saut suivant établi pour le tunnel TE et l'envoi d'une paire d'entrées de mappage d'étiquette entrante et sortante formées par l'ID de SR et l'étiquette à la table d'acheminement d'étiquette dans le plan d'acheminement.

5. Procédé selon la revendication 4, dans lequel le procédé comprend en outre :
lorsque le premier nœud reçoit un flux de données acheminé du domaine SR au domaine RSVP à travers les entrées de mappage dans un acheminement de mappage d'étiquette dans le plan d'acheminement, la conversion d'une étiquette SR du flux de données en une étiquette RSVP à acheminer.

6. Procédé selon la revendication 1, dans lequel le procédé comprend en outre :
le premier nœud qui reçoit un message portant des identifications de routeurs périphériques, PE, envoyées par les PE dans le domaine RSVP ; et
le premier nœud obtenant un protocole supporté par les PE depuis le message et par requête d'une base de données RSVP ou d'une base de données SR.

7. Appareil de délivrance d'informations d'adresse, l'appareil étant situé dans un premier nœud qui supporte un protocole de routage de segments, SR, et de réservation de ressources, RSVP, et qui est **caractérisé en ce qu'**il comprend :
un module de délivrance (610) agencé pour délivrer des informations d'adresse de nœuds SR à un domaine RSVP ; et
un module d'annonce (620) agencé pour annoncer des informations d'adresse de nœuds RSVP à un serveur de gestion de routage de segments, SRMS, dans un domaine SR ;
dans lequel le module de délivrance (610) délivre les informations d'adresse des nœuds SR au domaine RSVP en inondant d'informations d'adresse des nœuds SR via une extension de base de données d'un protocole de passerelle interne, IGP, TE ;
dans lequel le module d'annonce (620) annonce les informations d'adresse des nœuds RSVP au SRMS dans le domaine SR en annonçant les informations d'adresse des nœuds RSVP via l'extension de protocole de passerelle interne, IGP, ou via l'extension de protocole interactif du premier nœud et du SRMS.

8. Appareil selon la revendication 7, comprenant en outre :
un module de mappage (630) agencé pour, lorsque des nœuds dans le domaine RSVP établissent un tunnel d'ingénierie de trafic, TE, dont l'adresse de destination est les nœuds SR dans le domaine SR, mapper une première étiquette distribuée dans le tunnel TE à une première identification de SR, ID, correspondant à l'adresse de destination du tunnel TE ; et
un module d'envoi (640) agencé pour envoyer une paire d'entrées de mappage d'étiquette entrante et sortante formées par la première étiquette et la première ID de SR à une table d'acheminement d'étiquette dans un plan d'acheminement ;
comprenant en outre un premier module d'acheminement (650) agencé pour, lorsqu'un flux de données du domaine RSVP au domaine SR est reçu à travers les entrées de mappage de la table d'acheminement d'étiquette dans le plan d'acheminement, convertir une étiquette RSVP du flux de données en une étiquette SR à acheminer.

9. Appareil selon la revendication 8, comprenant en outre :
un module de traitement agencé pour recevoir un message PATH envoyé depuis le tunnel TE et répondre à un message de réservation, RESV, dans lequel une étiquette distribuée par le premier nœud à une encapsulation amont est portée dans le message RESV et une valeur de l'étiquette n'est pas une valeur d'étiquette d'une étiquette en incrustation.

10. Appareil selon la revendication 7, comprenant en outre :
un premier module de réception agencé pour recevoir un message portant des identifications de PE envoyées par les PE dans le domaine SR ; et
un premier module d'obtention agencé pour obtenir un protocole supporté par les PE depuis le message ou par requête d'une base de données RSVP ou d'une base de données SR.

11. Appareil selon la revendication 7, comprenant en outre :
un second module de réception (660) agencé pour recevoir une ID de SR affectée par le SRMS à chacun des nœuds RSVP dans le domaine RSVP ; et
un module d'établissement (670) agencé pour, pour chacun des nœuds RSVP, établir un tunnel TE vers le nœud RSVP, mapper l'ID de SR correspondant au nœud RSVP avec une étiquette d'un nœud de saut suivant établi par le tunnel TE et envoyer une paire d'entrées de mappage d'étiquette entrante et sortante formées par l'ID de SR et l'étiquette à la table d'acheminement d'étiquette dans le plan d'acheminement ;
comprenant en outre :
un second module d'acheminement (680) agencé pour, lors de la réception d'un flux de données acheminé du domaine SR au domaine RSVP à travers les entrées de mappage lors d'un acheminement par mappage d'étiquette dans le plan d'acheminement, convertir une étiquette SR du flux de données en une étiquette RSVP à acheminer.
